# FASCICULE DE BREVET EUROPEEN

(11) **EP 3 271 109 B1**
(45) Date de publication et mention de la délivrance du brevet: **12.12.2018**
(21) Numéro de dépôt: 15732864.2
(22) Date de dépôt: 11.06.2015
(51) Int. Cl.: B23P 6/00, B23Q 9/02, B23F 17/00

(54) **PROCÉDÉ DE RÉPARATION DE LA DENTURE D'UNE COURONNE DENTÉE**
VERFAHREN ZUR REPARATUR DER ZÄHNE EINES ZAHNKRANZES
METHOD FOR REPAIRING THE TEETH OF A RING GEAR

(30) Priorité: 17.03.2015 FR 1552197
(43) Date de publication de la demande: 24.01.2018
(73) Titulaire: Fives FCB, 59650 Villeneuve d'Ascq (FR)
(72) Inventeur: BOUDOT, François, 59650 Villeneuve d'Ascq (FR); KOTRYS, David, 59310 FAUMONT (FR); VANLERENBERGHE, Olivier, 59650 Villeneuve d'Ascq (FR)
(74) Mandataire: Bureau Duthoit Legros Associés
(86) Numéro de dépôt international: PCT/FR2015/051550
(87) Numéro de publication internationale: WO 2016/146900

(56) Documents cités:
- EP-A1- 1 568 439
- JP-A- H06 328 321
- US-A- 4 662 804
- US-A- 5 233 744

## Description

L'invention est relative à un procédé de réparation de la denture d'une couronne au moyen d'un dispositif d'usinage.

Un tel procédé est décrit dans le document EP 1 568 439 A1.

Le domaine de l'invention est celui des machines tournantes de grande taille, bien souvent à axe sensiblement horizontal, telles que rencontrées dans les industries chimique, minérale ou sucrière, munies d'un couronne de grande taille qui permet de les entraîner en rotation par l'intermédiaire d'un pignon et d'un ensemble moteur. On peut citer comme machines tournantes de ce type des fours rotatifs, des broyeurs à boulets, des broyeurs horizontaux à galets, des diffusions de sucrerie...

Avec ces machines, le contact répété entre les dents du pignon et de la couronne est source d'usure, qui peut se présenter sous divers aspects compte tenu du réglage de position relative entre le système d'entraînement dont font partie le pignon et la machine entraînée, et des divers mouvements de la machine autres que la rotation autour de l'axe. La forme des dents s'écarte du profil d'origine qui était de type épicycloïdal, leur épaisseur se réduit et des défauts ponctuels de surface peuvent se former.

Lorsque les surfaces de contact s'écartent du profil idéal, les forces qui s'exercent sur les dentures peuvent s'orienter dans des directions anormales, et des vibrations peuvent apparaître. Ceci induit des sollicitations mécaniques anormales à la fixation de la couronne, à l'ensemble moteur et à la machine elle-même et ses supports, qui peuvent provoquer des dommages aux divers systèmes mécaniques, et également amplifier les phénomènes d'usure des dentures.

Lorsque l'usure a atteint un niveau important, il est nécessaire de réparer ou de remplacer la couronne dentée. L'opération de remplacement est longue et coûteuse pour des machines de grande taille. Étant donné que la machine tournante et la couronne dentée ne tournent que dans un seul sens, le contact du pignon sur la couronne ne s'opère que sur l'un des deux flancs de chaque dent de la couronne. Une alternative est parfois le retournement de la couronne, dans le but d'exposer les autres flancs des dents qui n'ont pas subi d'usure. Cette opération de retournement reste néanmoins une opération lourde, même si elle est un peu moins coûteuse. Il est en général possible de réaliser une réparation pour restituer une qualité de forme des surfaces de contact compatible avec un bon fonctionnement mécanique, et ceci au moins une fois avant que l'on doive retourner ou remplacer la couronne.

Une telle réparation s'effectue sans démontage de la couronne ; seules les pièces de protection sont ôtées pour permettre l'accès aux dentures. Elle consiste en un usinage, généralement par meulage, qui recrée une forme convenable à l'engrènement sur une face de chaque dent de la couronne.

Les opérations de réparation de surfaces de dentures sont aujourd'hui réalisées manuellement par des opérateurs qui manoeuvrent les outils d'usinage ou meulage. Le résultat de l'opération pour chaque dent est évalué par comparaison à un gabarit qui constitue la forme de référence.

Selon l'expérience du demandeur, le résultat final dépend grandement du savoir-faire et de l'expérience de l'opérateur.

Le but de la présente invention est de proposer un procédé de réparation de la denture d'une couronne, adapté pour les couronnes de machines de grande taille, qui ne nécessite pas le démontage de la couronne, et dont le niveau d'automatisation permette la reproductivité de la qualité d'exécution.

L'invention trouvera une application particulière pour usiner des couronnes de diamètre supérieur ou égal à 1,5 mètre.

Un autre but de la présente invention est de proposer un tel procédé dont la mise en place du dispositif d'usinage sur la couronne est opérée simplement et rapidement. D'autres buts et avantages de l'invention apparaîtront au cours de la description qui va suivre qui n'est donnée qu'à titre indicatif et qui n'a pas pour but de la limiter. L'invention concerne un procédé de réparation de la denture d'une couronne dentée, le procédé mettant en oeuvre un dispositif d'usinage, amovible, comprenant un châssis et une partie mobile par rapport au châssis , supportant un organe de coupe, ledit procédé étant mis en oeuvre sur site, sans démontage de la couronne dentée de la machine tournante qu'elle est destinée à entraîner, ledit procédé comprenant les étapes suivantes, pour la mise en oeuvre de l'usinage de chaque dent :
- fixer ledit dispositif à la couronne dentée par serrage du dispositif d'usinage sur la couronne en une position de fixation sur la couronne en relation avec la dent à usiner,
- réaliser l'usinage de la dent de manière automatisée par la commande de l'organe de coupe selon des opérations d'usinage prédéterminées,
et dans lequel on réalise le déplacement du dispositif d'usinage d'une position de fixation sur la couronne dentée, correspondant à la dent précédemment usinée, vers une position de fixation d'une dent voisine à usiner, au moins sur une plage de travail déterminée, alors que la couronne dentée est immobile, ledit dispositif d'usinage étant suspendu et maintenu par au moins un câble en tension lié au bâti de la machine tournante.

Des modes de réalisations préférés sont décrits dans les revendications dépendantes.

Selon un mode de réalisation, les déplacements successifs du dispositif d'usinage en différentes positions de fixation sur la périphérie de la couronne dentée, alors que le dispositif est suspendu et maintenu par au moins un câble en tension, sont réalisés alors que la couronne dentée est immobile, sur un secteur de la couronne compris dans la plage de travail déterminée, sur la moitié supérieure de la couronne, définie entre un angle de 0° au minimum et un angle de 65° au maximum, les angles étant des angles au centre par rapport à l'horizontale.

Selon un mode de réalisation du procédé :
- on opère une rotation partielle de la machine tournante, après usinage par le dispositif d'usinage de toutes les dents dudit secteur de la couronne dentée, afin de positionner les dents du secteur voisin dans ladite plage de travail déterminée,
- on usine les dents dudit secteur voisin, une par une, par déplacements successifs du dispositif d'usinage d'une position de fixation sur la couronne dentée, correspondant à une dent précédemment usinée, vers une position de fixation d'une dent voisine à usiner, alors que la couronne dentée est immobile,
et dans lequel on répète cette séquence afin d'usiner la totalité des dents de la couronne. Selon un mode de réalisation, on réalise la rotation partielle de la machine tournante, alors que le dispositif d'usinage est fixé et solidaire de la couronne dentée, en particulier, en une position de fixation correspondant à la dent précédemment usinée.

Selon un mode de réalisation, le déplacement du dispositif d'usinage maintenu et suspendu par au moins un câble en tension se fait dans le sens descendant, pour aller positionner le dispositif d'usinage à proximité de la dent immédiatement inférieure à usiner. Alternativement, le déplacement du dispositif d'usinage maintenu et suspendu par au moins un câble en tension se fait dans le sens ascendant, pour aller positionner le dispositif à proximité de la dent immédiatement supérieure à usiner.

Selon un mode de réalisation avantageux, la fixation et le blocage du châssis du dispositif d'usinage sur la couronne sont assurés uniquement par l'action de serrage de parties du dispositif d'usinage sur les flancs de la couronne.

L'invention sera mieux comprise à la lecture de la description suivante accompagnée des dessins en annexe parmi lesquels :
- La figure 1 est une vue schématique, suivant l'axe de la machine tournante, illustrant la couronne dentée, ainsi que le dispositif d'usinage maintenu par au moins un câble fixé au bâti de la machine tournante,
- La figure 2 est une vue schématique de dessus illustrant la fixation du dispositif d'usinage à la couronnée dentée de la machine tournante,
- La figure 3 est une vue de côté illustrant, selon un mode de réalisation de l'invention, le positionnement du dispositif d'usinage sur la denture de la couronne dentée.

Aussi l'invention est relative à un procédé de réparation de la denture d'une couronne dentée 3, le procédé mettant en oeuvre un dispositif d'usinage 1, amovible, comprenant un châssis 11 et une partie mobile 13 par rapport au châssis 11, supportant un organe de coupe 15.

Ce procédé est mis en oeuvre sur site, c'est-à-dire, avantageusement, sans démontage de la couronne dentée 3 de la machine tournante 2 qu'elle est destinée à entraîner, typiquement par l'intermédiaire d'un pignon et d'un ensemble moteur. La machine tournante peut être, non limitativement, un four rotatif, un broyeur horizontal à galets ou un broyeur à boulets, ou encore, et dans le domaine de l'industrie sucrière, une machine connue sous le nom de diffusion. De telles machines tournantes sont toutes d'axe de rotation sensiblement horizontale.

Ledit procédé comprend les étapes suivantes, pour la mise en oeuvre de l'usinage de chaque dent :
- fixer ledit dispositif d'usinage 1 à la couronne dentée 3 par serrage du dispositif d'usinage 1 sur la couronne en une position de fixation sur la couronne dentée 3 en relation avec la dent à usiner,
- réaliser l'usinage de la dent de manière automatisée par la commande de l'organe de coupe 15 selon des opérations d'usinage prédéterminées.

La fixation du dispositif d'usinage 1 à la couronne peut être obtenue par serrage des flancs de la couronne, en particulier grâce à des parties de serrage 12 et 12' du dispositif d'usinage.

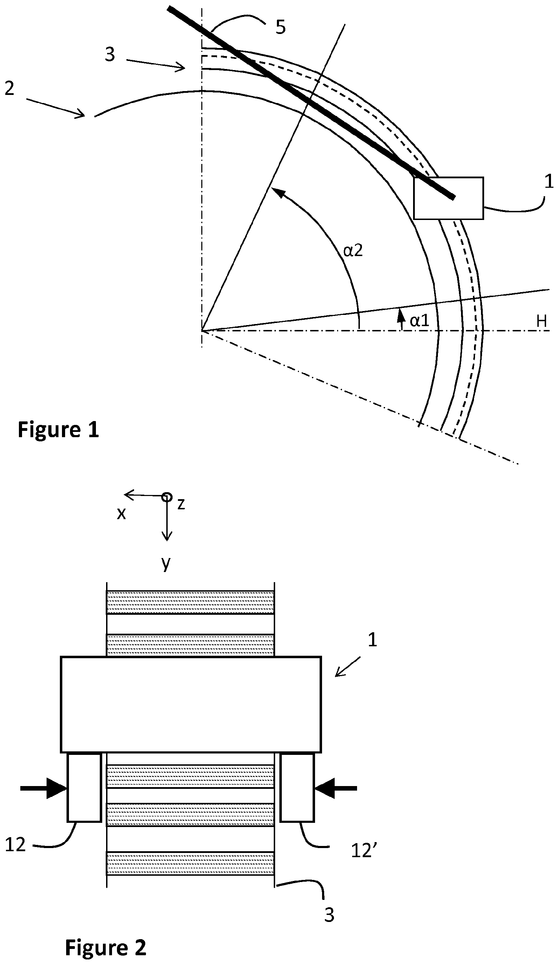

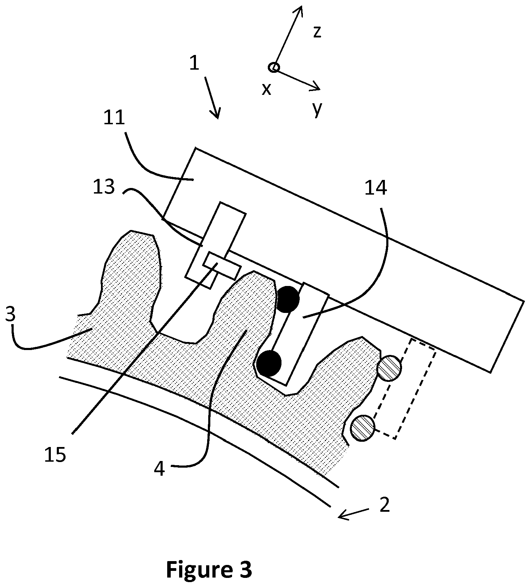

Les parties de serrage 12 et 12' sont déplaçables sur le châssis 11, et peuvent être rapprochées l'une de l'autre, suivant une direction perpendiculaire au plan de la couronne dentée 3, pour obtenir le serrage des deux flancs de la couronne dentée 3, par tout système adapté tel que système vis-écrou, actionneur hydraulique ou autre. Ces parties de serrage 12, 12' peuvent permettre également, par les appuis créés sur les flancs de la couronne, de définir la position du dispositif selon une direction perpendiculaire au plan de la couronne, à savoir la direction selon OX sur les repères des figures 2 et 3.

La position du dispositif d'usinage 1 par rapport à la dent à usiner 4 peut être définie, à titre d'exemple, par appui sur le flanc d'une dent de référence, le flanc étant situé, par rapport au sommet de la dent de référence, de direction opposée au flanc de la dent à usiner 4. La dent de référence peut être la dent à usiner, ou encore une dent immédiatement précédente.

A cet effet, le dispositif peut comprendre des moyens d'appui 14 sur le flanc d'une dent de référence, situé par rapport au sommet de la dent de référence, de direction opposée au flanc de la dent à usiner, la dent de référence étant la dent à usiner 4, ou encore une dent immédiatement précédente.

A titre d'exemple non limitatif illustré à la figure 3, les moyens d'appui 14 sur le flanc de la dent de référence comprennent un premier organe d'appui et un second organe d'appui destinés à réaliser respectivement un premier appui inférieur, et un deuxième appui supérieur, de positions décalées en hauteur sur le flanc de la dent. Eventuellement, le premier appui inférieur est agencé de manière à appuyer simultanément contre la base de la dent. Les moyens d'appui 14 peuvent permettre de définir la position du dispositif d'usinage dans le plan de la couronne à savoir le plan OYZ selon les figures 2 et 3.

Selon un mode de réalisation avantageux, la fixation et le blocage du châssis 11 sur la couronne 3 sont assurés uniquement par l'action de serrage des parties 12, 12' sur les flancs de la couronne 3, et les frottements entre ces parties 12,12' et les flancs de la couronne. Dans ce cas, aucune disposition supplémentaire n'est nécessaire pour assurer la fixation et le blocage du dispositif. Une telle simplicité de fixation est ici recherchée en ce que, et pour réparer l'ensemble des dents de la couronne, et comme il sera expliqué par la suite, il est nécessaire de déplacer à maintes reprises le dispositif d'un pas de denture, en différentes positions de fixation associées respectivement à la réparation des différentes dents de la couronne dentée 3.

L'usinage de la dent à usiner est réalisé par la commande de l'organe de coupe 15 selon des opérations d'usinage prédéterminées. A cet effet, les moyens de contrôle et de commande sont aptes à piloter automatiquement l'organe de coupe 15 pour réaliser l'usinage de la dent selon un profil déterminé.

Ces moyens de contrôle et de commande peuvent comprendre une mémoire dans laquelle sont enregistrées, sous forme numérique, des opérations d'usinage de la dent selon ledit profil déterminé. Ces instructions numériques d'usinage sont créées pour chaque couronne avant le début de l'usinage, en fonction des dimensions de la couronne, du module de la denture et de l'état d'usure. Il permet de reproduire pour chaque dent, et de façon automatique, un profil parfaitement identique. Une fois que la dent à usiner est retaillée, le châssis du dispositif est desserré, déplacé d'un pas, et fixé de nouveau à la couronne dans le but de retailler la dent suivante de la couronne.

Les degrés de liberté de l'outil de coupe permettent le retaillage de la dent à usiner selon un profil de dent souhaité, et en particulier un profil de dent épicycloïdale. A cet effet, la partie mobile 13 peut être déplaçable suivant plusieurs axes, en particulier suivant l'axe OX, à savoir transversalement à la couronne 3, suivant l'axe OY, à savoir suivant une direction parallèle au plan de la couronne et perpendiculaire à la direction radiale passant par la dent à usiner, et suivant la direction OZ à savoir sensiblement suivant la direction radiale passant par la dent à usiner 4. L'organe de coupe 15 peut encore être orientable par rapport à la partie mobile par exemple suivant un axe de rotation parallèle à l'axe OX.

Le dispositif d'usinage peut être celui décrit dans la demande internationale PCT déposée le même jour par la Demanderesse, ainsi que dans la demande de brevet français FR 1552195 du 17 mars 2015 : le contenu de ces demandes est introduit par référence.

Selon l'invention, on réalise le déplacement du dispositif d'usinage 1 d'une position de fixation sur la couronne dentée 3, correspondant à la dent précédemment usinée, vers une position de fixation d'une dent voisine à usiner, alors que la couronne dentée 3 est immobile, ledit dispositif d'usinage 1 étant suspendu et maintenu par au moins un câble 5 en tension lié au bâti de la machine tournante 2.

Le déplacement du dispositif d'une position de fixation à une position de fixation d'une dent voisine peut être aidé d'une action manuelle de l'opérateur. Eventuellement, et lors de cette action, la longueur du câble peut être allongée ou raccourcie par tout moyen adapté, tel qu'un treuil ou équivalent.

Le déplacement du dispositif d'usinage 1 maintenu et suspendu par au moins un câble 5 en tension peut être effectué dans le sens descendant, pour aller positionner le dispositif à proximité de la dent immédiatement inférieure à usiner.

Alternativement, le déplacement du dispositif d'usinage 1 maintenu et suspendu par au moins un câble 5 en tension se fait dans le sens ascendant, pour aller positionner le dispositif à proximité de la dent immédiatement supérieure à usiner.

Selon un mode de réalisation, illustré schématiquement à titre indicatif à la figure 1, les déplacements successifs du dispositif d'usinage 1 en différentes positions de fixation sur le rayon de la couronne dentée 3 sont réalisés alors que la couronne dentée 3 est immobile, sur un secteur de la couronne dentée 3 compris dans une plage de travail déterminée, sur la moitié supérieure de la couronne, et alors que le dispositif est suspendu et maintenu par au moins un câble 5 en tension.

Cette plage de travail est illustrée à titre d'exemple à la figure 1. Selon un mode de réalisation, cette plage de travail est définie entre un angle α1 de 0° au minimum et un angle α2 de 65° au maximum, les angles α1 et α2 étant des angles au centre par rapport à l'horizontale. Par exemple la plage de travail est la plage angulaire 0° à 65°.

Cette plage de travail découle des constatations des inventeurs selon lesquelles, et pour que la gravité s'exerce sur le dispositif d'usinage de façon à permettre au(x) câble(s) d'assurer leur mise en tension, et ainsi la retenue du dispositif d'usinage, le dispositif d'usinage 1 doit se déplacer dans un secteur angulaire de la couronne dentée 3 tel que toutes les tangentes à la couronne dentée 3 aient une pente vers le bas d'au moins 25° par rapport à l'horizontale.

Lorsque le dispositif d'usinage a réalisé l'usinage de toutes les dents du secteur présentes sur la plage de travail déterminée, on peut effectuer lentement une rotation partielle de la machine tournante 2 pour amener les dents du secteur suivant dans la zone angulaire de la plage de travail. Les dents de ce secteur sont alors usinées à leur tour, une par une, suivant le procédé précédemment décrit.

Ainsi et de manière générale, le procédé peut comprendre les étapes suivantes :
- on opère une rotation partielle de la machine tournante 2, après usinage par le dispositif d'usinage de toutes les dents dudit secteur de la couronne dentée 3, afin de positionner les dents du secteur voisin dans ladite plage de travail déterminée,
- on usine les dents dudit secteur voisin, une par une, par déplacements successifs du dispositif d'usinage d'une position de fixation sur la couronne dentée 3, correspondant à une dent précédemment usinée, vers une position de fixation d'une dent voisine à usiner, alors que la couronne dentée 3 est immobile.

Cette séquence est répétée autant de fois qu'il est nécessaire et afin d'usiner la totalité des dents de la couronne dentée 3.

Lors de la rotation partielle de la machine tournante 2, le dispositif d'usinage 1 peut être avantageusement fixé et solidaire de la couronne dentée, en particulier en une position de fixation correspondant à la dent précédemment usinée.

Naturellement d'autres modes de réalisation auraient pu être envisagés par l'homme du métier sans pour autant sortir du cadre de l'invention tel que défini par les revendications ci-après.

### NOMENCLATURE

1. Dispositif d'usinage,
2. Machine tournante,
3. Couronne dentée,
4. Dent à usiner
5. Câble
11. Châssis,
12. 12'. Parties de serrage,
13. Chariot,
14. Moyens d'appui sur la dent de référence,
15. Organe de coupe,

## Revendications

1. Procédé de réparation de la denture d'une couronne dentée (3), le procédé mettant en oeuvre un dispositif d'usinage (1), amovible, comprenant un châssis (11) et une partie mobile (13) par rapport au châssis (11), supportant un organe de coupe (15), ledit procédé étant mis en oeuvre sur site, sans démontage de la couronne dentée (3) de la machine tournante (2) qu'elle est destinée à entraîner, ledit procédé comprenant les étapes suivantes, pour la mise en oeuvre de l'usinage de chaque dent :
- fixer ledit dispositif d'usinage (1) à la couronne dentée (3) par serrage du dispositif d'usinage (1) sur la couronne en une position de fixation sur la couronne en relation avec la dent à usiner (4),
- réaliser l'usinage de la dent de manière automatisée par la commande de l'organe de coupe (15) selon des opérations d'usinage prédéterminées,
et dans lequel on réalise le déplacement du dispositif d'usinage (1) d'une position de fixation sur la couronne dentée (3), correspondant à la dent précédemment usinée, vers une position de fixation d'une dent voisine à usiner, alors que la couronne dentée (3) est immobile, ledit dispositif d'usinage (1) étant suspendu et maintenu par au moins un câble (5) en tension lié au bâti de la machine tournante (2).

2. Procédé selon la revendication 1, dans lequel les déplacements successifs du dispositif d'usinage (1) en différentes positions de fixation sur le rayon de la couronne dentée (3), alors que le dispositif est suspendu et maintenu par au moins un câble (5) en tension, sont réalisés alors que la couronne dentée (3) est immobile, sur un secteur de la couronne compris dans une plage de travail déterminée, sur la moitié supérieure de la couronne, définie entre un angle (α1) de 0° au minimum et un angle (α2) de 65° au maximum, les angles (α1, α2) étant des angles au centre par rapport à l'horizontale.

3. Procédé selon la revendication 2, dans lequel :
- on opère une rotation partielle de la machine tournante (2), après usinage par le dispositif d'usinage (1) de toutes les dents dudit secteur de la couronne dentée (3), afin de positionner les dents du secteur voisin dans ladite plage de travail déterminée,
- on usine les dents dudit secteur voisin, une par une, par déplacements successifs du dispositif d'usinage d'une position de fixation sur la couronne dentée (3), correspondant à une dent précédemment usinée, vers une position de fixation d'une dent voisine à usiner, alors que la couronne dentée (3) est immobile
et dans lequel on répète cette séquence afin d'usiner la totalité des dents de la couronne.

4. Procédé selon la revendication 3, dans lequel on réalise la rotation partielle de la machine tournante (2), alors que le dispositif d'usinage (1) est fixé et solidaire de la couronne dentée.

5. Procédé selon la revendication 4, dans lequel on réalise la rotation partielle de la machine tournante, alors que le dispositif d'usinage (1) est fixé et solidaire de la couronne dentée (3) en une position de fixation correspondant à la dent précédemment usinée.

6. Procédé selon l'une des revendications 1 à 5, dans lequel le déplacement du dispositif d'usinage maintenu et suspendu par au moins un câble en tension se fait dans le sens descendant, pour aller positionner le dispositif à proximité de la dent immédiatement inférieure à usiner.

7. Procédé selon l'une des revendications 1 à 5, dans lequel le déplacement du dispositif d'usinage maintenu et suspendu par au moins un câble en tension se fait dans le sens ascendant, pour aller positionner le dispositif à proximité de la dent immédiatement supérieure à usiner.

8. Procédé selon l'une des revendications 1 à 7, dans lequel la fixation et le blocage du châssis (11) du dispositif d'usinage sur la couronne (3) sont assurés uniquement par l'action de serrage de parties (12, 12') du dispositif d'usinage sur les flancs de la couronne (3).

## Patentansprüche

1. Verfahren zur Reparatur der Zähne eines Zahnkranzes (3), wobei das Verfahren eine abnehmbare Bearbeitungsvorrichtung (1) verwendet, umfassend einen Rahmen (11) und einen in Bezug auf den Rahmen (11) bewegbaren Teil (13), der ein Schneidelement (15) trägt, wobei das Verfahren in situ durchgeführt wird, ohne den Zahnkranz (3) der sich drehenden Maschine (2) zu demontieren, die dieser antreiben soll, wobei das Verfahren die folgenden Schritte zur Durchführung der Bearbeitung jedes Zahns umfasst:
- Befestigen der Bearbeitungsvorrichtung (1) an dem Zahnkranz (3) durch Anbringen der Bearbeitungsvorrichtung (1) an dem Kranz in einer Befestigungsposition auf dem Kranz in Bezug auf den zu bearbeitenden Zahn (4),
- Durchführen der Bearbeitung des Zahns auf automatisierte Weise durch die Steuerung des Schneidelements (15) gemäß vorherbestimmten Bearbeitungsvorgängen,
und wobei die Verschiebung der Bearbeitungsvorrichtung (1) von einer Befestigungsposition auf dem Zahnkranz (3), die dem zuvor bearbeiteten Zahn entspricht, zu einer Befestigungsposition eines zu bearbeitenden benachbarten Zahns durchgeführt wird, während der Zahnkranz (3) stationär ist, wobei die Bearbeitungsvorrichtung (1) aufgehängt ist und von mindestens einem gespannten Kabel (5) gehalten wird, das mit dem Gestell der sich drehenden Maschine (2) verbunden ist.

2. Verfahren nach Anspruch 1, wobei die aufeinanderfolgenden Verschiebungen der Bearbeitungsvorrichtung (1) in verschiedenen Befestigungspositionen am Radius des Zahnkranzes (3), während die Vorrichtung aufgehängt ist und von mindestens einem gespannten Kabel (5) gehalten wird, durchgeführt werden, während der Zahnkranz (3) stationär ist, auf einem Sektor des Kranzes, der in einem vorherbestimmten Arbeitsbereich liegt, in der oberen Hälfte des Kranzes, definiert zwischen einem Winkel (α1) von mindestens 0° und einem Winkel (α2) von höchstens 65°C, wobei die Winkel (α1, α2) Winkel im Zentrum in Bezug auf die Horizontale sind.

3. Verfahren nach Anspruch 2, wobei:
- eine teilweise Rotation der sich drehenden Maschine (2) nach der Bearbeitung, durch die Bearbeitungsvorrichtung (1), aller Zähne des Sektors des Zahnkranzes (3) durchgeführt wird, um die Zähne des Sektors benachbart dem vorherbestimmten Arbeitsbereich zu positionieren,
- die Zähne des benachbarten Sektors einzeln durch aufeinanderfolgende Verschiebungen der Bearbeitungsvorrichtung von einer Befestigungsposition auf dem Zahnkranz (3), die einem zuvor bearbeiteten Zahn entspricht, zu einer Befestigungsposition eines zu bearbeitenden benachbarten Zahns bearbeitet werden, während der Zahnkranz (3) stationär ist,
und wobei diese Sequenz wiederholt wird, um die Gesamtheit der Zähne des Kranzes zu bearbeiten.

4. Verfahren nach Anspruch 3, wobei die teilweise Rotation der sich drehenden Maschine (2) durchgeführt wird, während die Bearbeitungsvorrichtung (1) an dem Zahnkranz befestigt und mit diesem fest verbunden ist.

5. Verfahren nach Anspruch 4, wobei die teilweise Rotation der sich drehenden Maschine (2) durchgeführt wird, während die Bearbeitungsvorrichtung (1) an dem Zahnkranz (3) an einer Befestigungsposition befestigt und mit diesem fest verbunden ist, die dem zuvor bearbeiteten Zahn entspricht.

6. Verfahren nach einem der Ansprüche 1 bis 5, wobei die Verschiebung der Bearbeitungsvorrichtung, die von mindestens einem gespannten Kabel gehalten wird und aufgehängt ist, in der absteigenden Richtung erfolgt, um die Vorrichtung in der Nähe des zu bearbeitenden unmittelbar darunterliegenden Zahns zu positionieren.

7. Verfahren nach einem der Ansprüche 1 bis 5, wobei die Verschiebung der Bearbeitungsvorrichtung, die von mindestens einem gespannten Kabel gehalten wird und aufgehängt ist, in der aufsteigenden Richtung erfolgt, um die Vorrichtung in der Nähe des zu bearbeitenden unmittelbar darüberliegenden Zahns zu positionieren.

8. Verfahren nach einem der Ansprüche 1 bis 7, wobei die Befestigung und die Blockierung des Rahmens (11) der Bearbeitungsvorrichtung auf dem Kranz (3) einzig durch die Wirkung des Anbringens der Teile (12, 12') der Bearbeitungsvorrichtung an den Flanken des Kranzes (3) sichergestellt werden.

## Claims

1. Method for repairing the teeth of a ring gear (3), the method implementing a removable machining device (1) comprising a chassis (11) and a portion (13) mobile with respect to the chassis (11), supporting a cutting member (15), said method being implemented on site, without disassembly of the ring gear (3) of the rotating machine (2) that it is intended to rotate, said method comprising the following steps, for carrying out the machining of each tooth:
- attaching said machining device (1) to the ring gear (3) by clamping the machining device (1) onto the ring gear in a position of attachment onto the ring gear corresponding to the tooth (4) to be machined,
- carrying out the machining of the tooth in an automated manner via the control of the cutting member (15) according to predetermined machining operations,
and wherein the machining device (1) is moved from a position of attachment onto the ring gear (3), corresponding to the tooth previously machined, to a position of attachment of a neighbouring tooth to be machined, while the ring gear (3) is immobile, said machining device (1) being suspended and maintained by at least one cable (5) under tension connected to the frame of the rotating machine (2).

2. Method according to claim 1, wherein the successive movements of the machining device (1) into various attachment positions on the radius of the ring gear (3), while the device is suspended and maintained by at least one cable (5) under tension, are carried out while the ring gear (3) is immobile, over a sector of the ring gear within a predetermined working range, on the upper half of the ring gear, defined between an angle (α1) of 0° at minimum and an angle (α2) of 65° at maximum, the angles (α1, α2) being central angles with respect to the horizontal direction.

3. Method according to claim 2, wherein:
- a partial rotation of the rotating machine (2) is carried out, after machining, by the machining device (1), of all the teeth of said sector of the ring gear (3), in order to position the teeth of the neighbouring sector in said predetermined working range,
- the teeth of said neighbouring sector are machined, one by one, via successive movements of the machining device from a position of attachment onto the ring gear (3), corresponding to a tooth previously machined, to a position of attachment of a neighbouring tooth to be machined, while the ring gear (3) is immobile
and wherein this sequence is repeated in order to machine the totality of the teeth of the ring gear.

4. Method according to claim 3, wherein the partial rotation of the rotating machine (2) is carried out, while the machining device (1) is attached and rigidly connected to the ring gear.

5. Method according to claim 4, wherein the partial rotation of the rotating machine is carried out, while the machining device (1) is attached and rigidly connected to the ring gear (3) in an attachment position corresponding to the tooth previously machined.

6. Method according to one of claims 1 to 5, wherein the movement of the machining device maintained and suspended by at least one cable under tension is carried out in the downward direction, in order to position the machining device near the tooth to be machined immediately below.

7. Method according to one of claims 1 to 5, wherein the movement of the machining device maintained and suspended by at least one cable under tension is carried out in the upward direction, in order to position the machining device near the tooth to be machined immediately above.

8. Method according to one of claims 1 to 7, wherein the attachment and the locking of the chassis (11) of the machining device onto the ring gear (3) are carried out solely by the action of clamping portions (12, 12') of the machining device onto the sides of the ring gear (3).
